(19) Europäisches Patentamt
European Patent Office
Office européen des brevets

(11) Publication number: 0 262 078 A2

(12) **EUROPEAN PATENT APPLICATION**

(21) Application number: 87630191.2

(51) Int. Cl.[4]: C 08 F 297/02

(22) Date of filing: 15.09.87

(30) Priority: 22.09.86 US 910058

(43) Date of publication of application: 30.03.88 Bulletin 88/13

(84) Designated Contracting States: DE ES FR GB IT NL

(71) Applicant: THE GOODYEAR TIRE & RUBBER COMPANY
1144 East Market Street
Akron, Ohio 44316-0001 (US)

(72) Inventor: Cunningham, Robert Elwin
342 Kenilworth Drive
Akron Ohio 44313 (US)

(74) Representative: Weyland, Joseph Jean Pierre
Goodyear International Tire Technical Center Patent Department Avenue Gordon Smith
L-7750 Colmar-Berg (LU)

(54) **Star polymer.**

(57) It has been determined that certain star polymers which contain isopropenylnaphthalene or vinylnaphthalene have particular utility as thermoplastic elastomers for molding applications and in adhesive compositions. For instance, these star polymers have outstanding strength at elevated temperatures. This invention more specifically relates to a block polymer having the star-shaped, asymmetrical structure:

$$(A-B)_x - Y$$

wherein A is a polymer block which is comprised of repeat units which are derived from a member selected from the group consisting of isopropenylnaphthalene and vinylnaphthalene; wherein B is a polymer block which is comprised of repeat units which are derived from at least one conjugated diolefin monomer; wherein Y is the residue of at least one multivinylaromatic coupling agent; and wherein x is an integer from 2 to about 20.

EP 0 262 078 A2

**Description**

## STAR POLYMER

### Background of the Invention

Thermoplastic elastomers are very useful because they provide the properties of rubbers and the processability of thermoplastics. They can be processed directly into finished articles by conventional thermoplastic techniques, such as injection molding or extrusion. In general, they provide the desirable physical characteristics of thermoset rubber in terms of flexibility, elastic recovery, resilience, traction and the like. It is these rubber-like properties that distinguish thermoplastic elastomers from traditional flexible thermosplastic materials.

Thermoplastic elastomers offer a significant advantage in processing economics over typical rubbers which are cured with sulfur. This is because the processing of thermoplastic elastomers is much less energy intensive than is curing typical rubbers. This, coupled with the fact that scrap can be reprocessed, allows for much more efficient plant and equipment utilization.

The characteristics of thermoplastic elastomers are dependent on the types of polymers used as well as the manner in which they are combined. Commercially available thermoplastic elastomers vary widely in chemical composition and structure. However, thermoplastic elastomers are often block copolymers. Such block copolymers are made up of blocks or segments of a thermoplastic and an elastomer.

The thermoplastic segment in such block copolymers can be glassy or crystalline. For instance, polystyrene, which is glassy, is very commonly used, although crystallizable polymer also can be utilized. The softer segment is commonly comprised of repeat units which are derived from a conjugated diolefin monomer, such as butadiene or isoprene. The hard thermoplastic segment and the soft rubbery segments in such block copolymers are incompatible. Accordingly, domains or regions of the soft material and the hard material are formed. The morphological structure formed consists of domains of hard blocks which are connected to the flexible elastomeric segments. The thermoplastic domains, in effect, crosslink the rubbery segments resulting in a reinforced network structure which behaves similarly to a chemically crosslinked system. In contrast to a chemically crosslinked rubber, the network polymer structure formed in articles made of thermoplastic elastomers is reversible. In other words, as the thermoplastic elastomer is heated above the glass transition temperature of the thermoplastic segments, the hard blocks soften to plasticize the rubber segments (soft segments) so that the thermoplastic elastomer can be processed like a conventional thermoplastic. A network structure is reestablished when the thermoplastic elastomer is cooled below the glass transition temperature of the thermoplastic segments therein.

A block copolymer which is reported to have particular utility in adhesive compositions which has the structure (A-B Y $C)_z$ wherein A is a poly(monoalkenyl) block, wherein B and C are poly(conjugated diene) polymer blocks, wherein Y is the residue of a multifunctional coupling agent, and wherein x plus z is greater than 6, is disclosed in U.S. Patent 4,391,949. Adhesive compositions containing such block polymers which are reported to have a desirable balance of properties are also disclosed therein.

Diblock polymers and triblock polymers which are comprised of blocks which are derived from 2-isopropenylnapthalene and 1,3-butadiene are disclosed in United States Patent 4,360,639. These polymers are reported to display rubber-elastic characteristics with improved high-temperature stability. These polymers are prepared in inert aliphatic or cycloaliphatic hydrocarbon solvents utilizing organolithium catalysts at very low temperatures which are between 0°C and -80°C. In the process described it is preferred to utilize temperatures between -50°C and -80°C.

The synthesis technique described in U.S. Patent 4,360,639 is difficult to carry out on a commercial basis because of the low temperatures which are required. Such a low temperature polymerization naturally requires a great deal of refrigeration capacity and accordingly consumes large amounts of energy for the cooling required. Solutions of "living" isopropenylnaphthalene-butadiene diblock copolymers are very viscous at the low temperatures specified and are exceedingly difficult to handle. Even though polyisopropenylnaphthalene/polybutadiene/polyisopropenylnaphthalene triblock polymers have outstanding characteristics, these problems associated with their synthesis have severely hindered their commercialization.

### Summary of the Invention

It has been discovered that certain star polymers containing isopropenylnaphthalene or vinylnaphthalene have outstanding characteristics for utilization as thermoplastic elastomers in molding applications and in adhesive compositions. Such star polymers can be prepared at moderate temperatures utilizing relatively conventional equipment. Accordingly, such polymers can be produced on a commercial basis without encountering the severe difficulties associated with utilizing low temperature polymerizations. It has also been determined that such star polymers act as thermoplastic elastomers which have outstanding strength at elevated temperatures.

The subject invention specifically relates to a process for synthesizing a star polymer having excellent high temperature strength which comprises: (1) polymerizing a member selected from the group consisting of isopropenylnaphthalene and vinylnaphthalene in the presence of an organolithium catalyst to produce lithium terminated blocks, with the proviso that if isopropenylnaphthalene is being polymerized that a polymerization

temperature within the range of -40° C to 40° C is utilized and with the proviso that if vinylnaphthalene is being polymerized that a polymerization temperature within the range of 20° C to 100° C is utilized; (2) allowing the lithium terminated blocks to react with at least one conjugated diolefin monomer at a temperature within the range of 20°C to 100°C to produce lithium terminated diblock polymers; and (3) coupling the lithium terminated diblock polymers with at least one multivinylaromatic coupling agent at a temperature within the range of 0° C to 100° C to produce said star polymer.

The present invention also specifically reveals a block polymer having the star-shaped, asymmetrical structure:

(A-B Y

wherein A is a polymer block which is comprised of repeat units which are derived from a member selected from the group consisting of isopropenylnaphthalene and vinylnaphthalene; wherein B is a polymer block which is comprised of repeat units which are derived from at least one conjugated diolefin monomer; wherein Y is the residue of at least one multivinylaromatic coupling agent, and wherein x is an integer from 2 to about 20.

Detailed Description of the Invention

The star polymers of the present invention can be prepared utilizing conventional polymerization and processing equipment. These star polymers are normally synthesized in a hydrocarbon solvent which can be one or more aromatic, paraffinic, or cycloparaffinic compounds. The solvents used in such solution polymerizations will normally contain from about 4 to about 10 carbon atoms per molecule and will be liquids under the conditions of the polymerization. Some representative examples of suitable organic, solvents include pentane, isooctane, cyclohexane, normal-hexane, benzene, toluene, xylene, ethylbenzene, tetrahydrofuran, and the like, alone or in admixture.

The first step utilized in the synthesis of such star polymers involves polymerizing either isopropenylnaphthalene or vinylnaphthalene in the presence of an organolithium catalyst. The polymerization temperature used depends upon whether isopropenylnaphthalene or vinylnaphthalene is being polymerized. In polymerizations of isopropenylnaphthalene, a polymerization temperature within the range of -40°C to 40°C is utilized. It is generally preferred to utilize a temperature within the range of -5°C to 30°C in polymerizations of isopropenylnaphthalene. It is normally more preferred to utilize a polymerization temperature in the range of 0°C to 20°C in polymerizations of isopropenylnaphthalene. In polymerizations of vinylnaphthalene, the polymerization temperature utilized will normally be within the range of 20° C to 100° C. Such polymerizations of vinylnaphthalene will preferably be carried out at a polymerization temperature within the range of 40°C to 70° C with polymerization temperatures in the range of 50°C to 65° C being most preferred. In such solution polymerizations which utilize an organic solvent, there will normally be from 5 to 35 weight percent monomers in the polymerization medium. Such polymerization mediums are, of course, comprised of the organic solvent, the monomer (isopropenylnaphthalene or vinylnaphthalene) and an organolithium initiator. In most cases it will be preferred for the polymerization medium to contain from 10 to 30 weight percent monomers. It is generally more preferred for the polymerization medium to contain 20 to 25 weight percent monomers.

The polymerization of isopropenylnaphthalene or vinylnaphthalene in the presence of an organolithium catalyst results in the formation of a lithium terminated polymer. Such polymeric segments or blocks which are comprised of repeat units which are derived from isopropenylnaphthalene or vinylnaphthalene are utilized as the end blocks in the arms of the star polymers of this invention. The amount of organolithium initiator utilized is adjusted so that the polymer produced has a number average molecular weight between about 4,000 and about 50,000. These polymeric blocks which are comprised of polyisopropenylnaphthalene or polyvinylnaphthalene generally have a number average molecular weight in the range of about 8,000 to about 30,000. In most cases it is more preferable for such blocks to have a number average molecular weight within the range of 10,000 to 20,000.

The organolithium compounds which are utilized as initiators are normally organo monolithium compounds. The organolithium compounds which are preferred as initiators are monofunctional compounds which can be represented by the formula: R-Li, wherein R represents a hydrocarbyl radical containing from 1 to about 20 carbon atoms. Generally, such monofunctional organolithium compounds will contain from 1 to about 10 carbon atoms. Some representative examples of preferred organolithium compounds include methyllithium, ethyllithium, isopropyllithium, n-butyllithium, sec-butyllithium, n-hexyllithium, n-octyllithium, tert-octyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium. Secondary-butyllithium is a highly preferred organolithium initiator.

The amount of organolithium initiator utilized will vary depending upon the molecular weight which is desired for the polymer being synthesized as well as the precise polymerization temperature which will be utilized. The precise amount of organolithium compound required to produce a polymer of a desired molecular weight can be easily ascertained by persons skilled in the art. However, as a general rule, from 0.01 to 1 phm (parts per 100 parts by weight of monomer) of an organolithium initiator will be utilized. In most cases, from 0.01 to 0.1 phm of the organolithium initiator will be utilized with it being preferred to utilize 0.025 to 0.07 phm of the organolithium initiator.

The lithium-terminated polyisopropenylnaphthalene or lithium-terminated polyvinylnaphthalene made is then further reacted with one or more conjugated diolefin monomers in order to produce the block copolymer

arms which are utilized in the star polymers of this invention. This step comprises allowing the lithium-terminated block to react with one or more conjugated diolefin monomers at a temperature within the range of 20° C to 100° C. This results in the formation of a lithium-terminated diblock polymer. It is preferred to prepare such lithium-terminated diblocks utilizing a polymerization temperature within the range of 40° C to 70° C with a temperature within the range of 50° C to 65° C being more preferred.

The amount of monomers utilized in preparing the polydiolefin block is selected so as to produce a block having the desired molecular weight. For instance, the number average molecular weight of the polydiolefin block which is comprised of repeat units which are derived from at least one conjugated diolefin will generally range from about 5,000 to about 100,000. It is generally preferred for such polydiolefin blocks to have a number average molecular weight within the range of 10,000 to 70,000. It is more preferred for such polydiolefin blocks to have a number average molecular weight within the range of 25,000 to 60,000.

The conjugated diolefin monomers which are utilized in the synthesis of the polydiolefin blocks generally contain from 4 to about 12 carbon atoms. Those containing from 4 to 8 carbon atoms are generally preferred for commercial purposes. For similar reasons, 1,3-butadiene and isoprene are the most commonly utilized conjugated diolefin monomers. Some additional conjugated diolefin monomers that can be utilized include 2,3-dimethyl-1,3-butadiene, piperylene, 3-butyl-1,3-octadiene, 2-phenyl-1,3-butadiene, and the like, alone or in admixture.

It is generally preferred to utilize 1,3-butadiene as the conjugated diolefin monomer in the synthesis of thermoplastic elastomers which are utilized in making molded articles. The star polymers of the subject invention also have useful properties as adhesives. It is normally preferred to utilize isoprene as the conjugated diolefin monomer in making star polymers which are prepared for use in adhesive applications. This is because the utilization of isoprene generally results in the formation of a polymer which has better tack characteristics.

The lithium-terminated diblocks are coupled so as to form the star polymers of this invention. This is done by reacting the lithium-terminated diblocks with at least one multivinylaromatic coupling agent. The multivinylaromatic coupling agents which can be used are aromatic compounds which contain at least 2 vinyl groups. The most common multivinylaromatic coupling agents contain 2 or 3 vinyl groups. In most cases, the multivinylaromatic coupling agents used in the practice of this invention will contain 2 vinyl groups.

Examples of suitable multivinylaromatic compounds include divinylbenzene, 1,2,4-trivinylbenzene, 1,3-divinylnaphthalene, 1,8-divinylnaphthalene, 1,3,5-trivinylnaphthalene, 2,4-divinylbiphenyl, and the like. The divinylaromatic hydrocarbons are preferred, particularly divinylbenzene in either its ortho, meta, or para isomer. Commercial divinylbenzene which is a mixture of the three isomers and other compounds is quite satisfactory.

Generally at least 2 moles of the multivinylaromatic coupling agent is utilized per mole of lithium in the lithium-terminated diblocks being coupled. The amount of lithium in the lithium-terminated diblocks is assumed to be the same as the amount of lithium in the organolithium catalyst utilized in polymerizing the isopropenylnaphthalene or vinylnaphthalene. In other words, at least 2 moles of the multivinylaromatic coupling agent will normally be employed for every mole of organomonolithium catalyst used. There is no upper limit on the amount of multivinylaromatic coupling agent that can be used. However, there is no reason to use more than about 30 moles of the multivinylaromatic coupling agent per mole of lithium. In most cases, from about 3 to about 20 moles of the multivinylaromatic coupling agent will be used per mole of lithium. It is generally preferred to utilize from 4 to 10 moles of multivinylaromatic coupling agent per mole of lithium with a molar ratio of 5 to 8 being more preferred.

In most cases the coupling is carried out by simply adding the multivinylaromatic coupling agent to the organic medium in which the lithium terminated diblocks were prepared. The coupling reaction can be carried out over a very wide temperature range. However, for practical reasons the coupling will normally be done at a temperature between about 0° C and about 100° C. It is normally preferred for the coupling to be done at a temperature within the range of 20° C to 80° C. In most cases, it is more preferable for the coupling to be done at a temperature between about 35° C and about 65° C.

The star polymers of this invention can be represented by the structural formula:

$$(A-B)_{x}-Y$$

wherein A represents an end block which is comprised of polyisopropenylnaphthalene or polyvinylnaphthalene, wherein B represents a polydiolefin block, wherein Y represents the residue of the multivinylaromatic coupling agent, and wherein x represents an integer from 2 to about 20. The A-B diblocks form the arms of the star polymer. The number of arms on the star polymer is designated by x. Star polymers having varying numbers of arms are normally produced. Thus, x represents an average. It is generally preferred for x to represent an integer of 3 to 10. The residue of the multivinylaromatic coupling agent (Y) cannot be represented by a single structural formula. This is because the multivinylaromatic coupling agent can couple the lithium-terminated diblocks in an almost infinite number of ways. In a very simple case, a single divinylbenzene molecule can link two lithium-terminated diblocks. In such a case, the polymer formed has only 2 arms and can be represented by the structural formula:

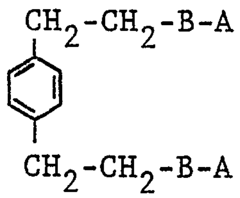

wherein B represents a polymeric segment which is derived from at least one conjugated diolefin monomer and wherein A represents a polymeric segment which is derived from either isopropenylnaphthalene or vinylnaphthalene.

The multivinylaromatic coupling agent utilized is capable of dimerizing, oligomerized, or polymerizing. This results in there being an almost limitless number of ways for the multivinylaromatic coupling agent to couple the lithium terminated diblocks. For instance, in cases where a divinylbenzene coupling agent dimerizes several different types of star polymers could be produced. For example, a polymer having the structural formula:

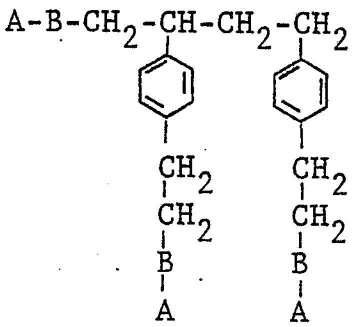

or

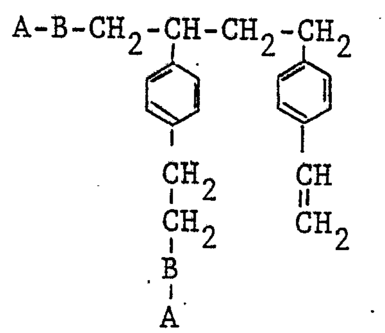

or

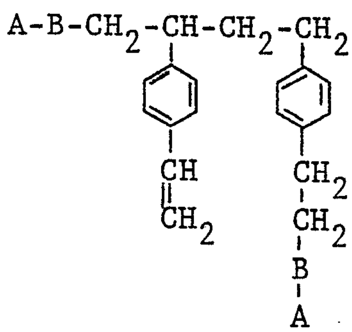

could result wherein, of course, B represents a polymeric block which is derived from a conjugated diolefin monomer and wherein A represents a polymeric block which is derived from isopropenylnaphthalene or vinylnaphthalene. As is readily apparent, the number of different types of star polymers that can form becomes quite large in cases where the multivinylaromatic coupling agent polymerizes. An example of such a star polymer which contains the residue of 5 divinylbenzene molecules can be represented by the structural formula:

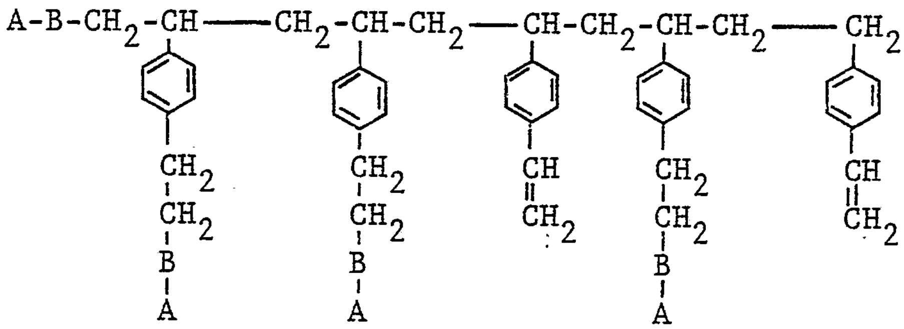

wherein the star polymer has 4 arms.

Following the coupling reaction, the star polymer produced is neutralized by the addition of a terminator for the purpose of removing the lithium radical. Some representative examples of suitable terminators include water, alcohols, and other reagents. The star polymer is then recovered from the organic solvent utilized by employing conventional techniques.

This invention is illustrated by the following examples which are merely for the purpose of illustration and are not to be regarded as limiting the scope of the invention or the manner in which it can be practiced. Unless specifically indicated otherwise, all parts and percentages are given by weight.

Example 1

In this experiment a star polymer containing repeat units derived from 2-vinylnaphthalene was synthesized. In the first step of the procedure used, a 2.2 M solution of 2-vinylnaphthalene in toluene was prepared by mixing 36.77 g of distilled 2-vinylnaphthalene in sufficient toluene to prepare 109 mls of solution. It was passed through a silica gel column and 20 ml portions were charged into 1 ox. (30 ml) bottles, all operations being done under a nitrogen atmosphere. A 1.44 M solution of sec-butyllithium in cyclohexane was added to a 20 ml portion of the 2-vinylnaphthalene in toluene solution in dropwise fashion until a permanent light rose color formed. Then 0.24 ml of the sec-butyllithium was added to the 2-vinylnaphthalene solution, and a dark red color formed at once. The bottle was capped, and soon become warm to the touch. It was placed in a beaker of cold water for a short time to moderate the polymerization; the bottle was stored at 3°C for about 18 hours (overnight).

A solution containing 18% butadiene by weight in toluene was prepared, passed through a silica gel column, and stored under nitrogen in a stainless steel cask. A 40 ml portion was charged to a 2 oz. (59 ml) bottle, and 0.06 ml of styrene was added. The amount of styrene added was about one percent by weight of the amount of butadiene present. Then 0.15 ml of a 0.20 M solution of sec-butyllithium in cyclohexane was added to the butadiene solution to react with impurities in it. After allowing the solutions to react for about 15 seconds, 11.6 mls of the "living" polyvinylnaphthalene solution was added under a nitrogen atmosphere. The bottle was capped and tumbled in a constant temperature both of which was maintained at 50°C. The polymerization was carried out for three hours.

Divinylbenzene (55% pure) was passed through a silica gel column and stored under nitrogen and over calcium hydride. A few milliliters were syringed into a small vial, which was sealed under nitrogen, and 1.0 M solution of sec-butyllithium was added dropwise until a faint permanent yellow color developed. Then 0.31 ml of the divinylbenzene (DVB) was syringed into the bottle containing the solution of the "living" polyvinylnaphthalene-polybutadiene diblock copolymer. The molar ratio of DVB to lithium was 6. The bottle was returned to the 50°C bath to react for about 16 hours. The DVB coupled the diblock copolymer forming a star block copolymer. After this time, the solution was viscous, hazy and dark orange. The polymerization was terminated by injecting 0.05 ml of deaerated methanol into the solution. The color rapidly disappeared from the solution and it became clear and colorless. It was poured into methanol containing a phenolic antioxidant. The polymer precipitated and was washed with a fresh methanol-antioxidant solution. It was dried in vacuo at about 90°C. The polymer yield was 9.05 g. The polymer was a tough, snappy elastomer. It had an inherent viscosity of 1.53 dl/gm in toluene at 30°C.

The polymer synthesized was cast from toluene into a film and determined to have a tensile strength of 5390 psi ($3.72 \times 10^7$ Pascals) and an elongation to break of 680% at 25°C. The star block polymer produced was also cast into a film utilizing methylene chloride as the solvent and was determined to have a tensile strength of 5560 psi ($3.83 \times 10^7$ Pascals) and an elongation to break of 660% at 25°C. The film which was cast from toluene was also determined to have a tensile strength of 1940 psi ($1.34 \times 10^7$ Pascals) and an elongation to break of 570% at 100°C. The polymer which was cast from methylene chloride was determined to have a tensile strength of 1980 psi ($1.37 \times 10^7$ Pascals) and an elongation to break of 610% at a temperature of 100°C (the sample elongated to the limits of the heating chamber without breaking).

Examples 2-13

A 2.51 M solution of 2-isopropenylnaphthalene (2-IPN) in toluene was prepared. A living poly(2-IPN) of desired molecular weight was prepared by adding the requisite amount of a 2.0 M solution of diethyl ether in cyclohexane and then adding a 1.0 M solution of sec-butyllithium in cyclohexane dropwise until a permanent dark green color formed in the solution. The molar ratio of diethyl ether to sec-butyllithium was 2. This typically required 0.08 ml of the sec-butyllithium solution for 35 mls of 2-IPN solution. The requisite amount of sec-butyllithium was added, producing a reddish-black solution. The bottle was capped and stored at about 0°C for at least 72 hours to insure that the 2-IPN polymerization reached equilibrium.

A solution containing 18.2 weight percent butadiene in toluene was prepared, passed through a silica gel column, and stored in a stainless steel cask under nitrogen. Portions of 70 mls each were charged to 4 oz. (118 ml) bottles under a nitrogen blanket. The scavenger level of this solution was determined utilizng a standard procedure. 0.10 ml of a 1.0 M solution of tetramethylethylenediamine in cyclohexane was added to accelerate initiation by the sec-butyllithium.

Block copolymers were prepared using 70 mls of the butadiene-toluene premix, in a 4 oz. (118 ml) bottle. To each bottle was added 0.11 ml of styrene; this is one percent by weight of the amount of butadiene present. Some styrene remained after all of the butadiene polymerized. When it was added to the living polybutadiene chains, the orange color of the styryl anion appeared. This serves as an "indicator" that the butadiene polymerization is complete. After the styrene was added, the scavenger level of sec-butyllithium was introduced and allowed to react for about 15 seconds. The requisite amount of "living" poly(2-IPN) was syringed into the bottle, and it was capped and placed into a 50°C water bath to tumble.

When the solution of "living" poly(2-IPN) was added to the butadiene-toluene premix, the mixture had the olive green color that is typical of the 2-IPN anion. The color rapidly changed to light tan as the butadiene began to polymerize. Initially, all solutions were clear; in less than one hour all had become opaque, indicating a phase separation had occurred in the solutions. The 1,3-butadiene was allowed to polymerize for three hours.

A series of star polymers containing polyisopropenylnaphthalene-polybutadiene arms was prepared with the number average molecular weights of the IPN blocks ranging from 10,000 to 30,000, and with IPN contents ranging from 30% to 50% (by weight). The compositions of these star copolymers are given in Table I. All of the copolymers are "star" polymers, branched from the center of the polybutadiene block by divinylbenzene. The DVB undoubtedly homopolymerized to some extent in addition to adding to the "living" diblock copolymers. This DVB oligomer forms a central node from which radiate the diblock arms, resulting in a star-shaped polymer molecule. The amount of DVB used to link all of the diblock chains is usually calculated in terms of the molar ratio of DVB/Li. In order to insure that maximum physical properties would be attained, all of the star polymers were coupled with a molar ratio of DVB to lithium of 6.

The stress-strain properties of solvent-cast films of triblock copolymers are strongly influenced by the casting solvent. Hence, films of the star copolymers were cast from two solvents: toluene, a good solvent for the polybutadiene block, and dichloromethane, a good solvent for the poly(IPN) blocks. Such films should represent the extremes in morphologies of these copolymers, ranging from highly rubbery structures to plastic ones in which the poly(IPN) blocks are the continuous phase. In this manner, nearly optimum stress-strain properties of each copolymer should be attained for a film from at least one solvent. This should minimize the possibility that poor stress-strain properties of any polymer resulted from an improper casting solvent.

Stress-strain data for star copolymers cast from toluene are given in Table II, and stress-strain data for star copolymers cast from dichloromethane are given in Table III. All copolymers had tensile strengths greater than 4,000 psi ($2.758 \times 10^7$ Pascals) at 25°C, from at least one casting solvent. A few exceeded 6,000 psi ($4.137 \times 10^7$ Pascals), and the best tensile strength, for Example 12 which was cast from toluene, was 7030 psi ($4.847 \times 10^7$ Pascals). All copolymers had very good tensile strengths at 100°C, with most values exceeding 1,000 psi ($6.895 \times 10^6$ Pascals) and a few greater than 2,000 psi ($1.379 \times 10^7$ Pascals). Ultimate tensile strengths could not be obtained for all samples at 100°C because test pieces elongated to the limit of the heating chamber without breaking. Some of these probably have tensile strengths approaching 2,000 psi ($1.379 \times 10^7$ Pascals).

These are exceptionally good tensile strengths at either temperature, and surpass values obtained for comparable copolymers with α-methylstyrene end-blocks. They show conclusively that triblock copolymers of 2-IPN can form thermoplastic elastomers with excellent stress-strain properties. The high glass transition temperature (Tg) of the poly(IPN) can clearly be utilized to improve the elevated temperature strength of this type of star copolymer. The Tg of poly(IPN) homopolymers in the molecular weight range used for some end blocks was 208°C. The tangent σ curve for Example 18 had a loss peak near 200°C, also demonstrating the region of Tg of the poly(IPN) blocks.

Some trends can be noted in the data, related to block molecular weights and copolymer compositions. For a given composition, tensile strengths at 25°C generally increase as molecular weight increases, and to a lesser extent so do ultimate elongations. The same trends seem to occur at 100°C, but they are less clear because of scatter in the data and the fact that some samples did not reach their break point.

Within any given series having the same molecular weights for the poly(IPN) blocks, maximum tensile strength at 25°C was exhibited by copolymers containing 40% IPN. At 100%C, however, maximum tensile strength usually occurred for copolymers with 50% IPN content. These latter copolymers are rather plasticlike at 25°C and apparently will not support as much load as their more elastomeric counterparts. At 100°C, they

may be starting to soften and become more rubbery, so they will support more load than those copolymers with less end-block content. At both temperatures, ultimate elongations steadily decrease as the IPN content increases.

The polymers begin to exhibit a yield point as the IPN content increases, and then undergo a region of cold-drawing before elastic extension begins. Some star copolymers containing 50% IPN had yield points of about 2,800 psi at 25°C and about 800 psi at 100°C. The most marked example of the effect of casting solvent on tensile strength is shown in Example 12. When cast from toluene, this polymer had the highest tensile at 25°C of any reported herein, 7030 psi (4.847 x $10^7$ Pascals). Even with duplicate castings from dichloromethane, the highest tensile that could be attained was 3,440 psi (2.372 x $10^7$ Pascals). The reason for this wide discrepancy is not known. The tensile strength of no other star copolymer tested showed such a large difference between the two casting solvents.

## Table I

### Composition and Solution Properties of Star Polymers

| | Block Mol. Wt. (x $10^{-3}$) | | | Weight Percent | | |
|---|---|---|---|---|---|---|
| Example | IPN | Bd | IPN | IPN | Bd | D.S.V. |
| 2 | 10 | 47 | 10 | 30 | 70 | 0.87 |
| 3 | 10 | 30 | 10 | 40 | 60 | 0.60 |
| 4 | 10 | 20 | 10 | 50 | 50 | 0.39 |
| 5 | 15 | 70 | 15 | 30 | 70 | 1.10 |
| 6 | 15 | 45 | 15 | 40 | 60 | 1.13 |
| 7 | 15 | 30 | 15 | 50 | 50 | 0.50 |
| 8 | 20 | 93 | 20 | 30 | 70 | 0.92 |
| 9 | 20 | 60 | 20 | 40 | 60 | 0.90 |
| 10 | 20 | 40 | 20 | 50 | 50 | 0.58 |
| 11 | 30 | 140 | 30 | 30 | 70 | 2.25 |
| 12 | 30 | 90 | 30 | 40 | 60 | 1.35 |
| 13 | 30 | 60 | 30 | 50 | 50 | 0.95 |

The molecular weights reported in Table I are calculated values which are determined based on the relationship that molecular weight is equal to the number of grams of polymer divided by the number of moles of organomonolithium initiator utilized. All of the polymers were "star" branched polymers which were coupled with divinylbenzene at molar ratio of DVB to lithium of 6.0.

## Table II

### Stress-Strain Properties of Star Polymer Films

| Example | Cast from Toluene Tensile (psi) / Elongation (%) 25°C | 100°C |
|---|---|---|
| 2 | 4850/760 | 610/540 |
| 3 | 5420/550 | 840/480 |
| 4 | 3900/330 | 700/305 |
| 5 | 4740/780 | 990/680* |
| 6 | 5850/590 | 1760/570 |
| 7 | 4880/405 | 1880/420 |
| 8 | 5100/780 | 1010/650 |
| 9 | 6210/650 | 1620/660* |
| 10 | 5090/450 | 1790/540 |
| 11 | 5310/880 | 690/720* |
| 12 | 7030/650 | 1720/630* |
| 13 | 5250/460 | 2530/530 |

* Samples elongated to the limits of the heating chamber without breaking.

Table III

Stress-Strain Properties of Star Polymer Films

Cast from Methylene Chloride

| Example | Tensile (psi) / Elongation (%) 25°C | 100°C |
|---|---|---|
| 2 | 4530/720 | 820/560 |
| 3 | 5750/550 | 1080/510 |
| 4 | 4070/340 | 1010/360 |
| 5 | 3950/660 | 1200/670 |
| 6 | 6230/530 | 2480/590 |
| 7 | 5720/400 | 2550/410 |
| 8 | 5000/690 | 1090/580* |
| 9 | 6590/650 | 1680/580* |
| 10 | 5680/460 | 1730/470 |
| 11 | 4590/730 | 1000/680* |
| 12 | 3440/470 | 1470/540* |
| 13 | 6720/470 | 2960/510 |

* Samples elongated to the limits of the heating chamber without breaking.

While certain representative embodiments and details have been shown for the purpose of illustrating the subject invention, it will be apparent to those skilled in this art that various changes and modifications can be made therein without departing from the scope of the subject invention.

**Claims**

1. A process for synthesizing a star polymer having excellent high temperature strength which is characterized by: (1) polymerizing a member selected from the group consisting of isopropenylnaphthalene and vinylnaphthalene in the presence of an organolithium catalyst to produce lithium terminated blocks, with the proviso that if isopropenylnaphthalene is being polymerized that a polymerization temperature within the range of -40°C to 40°C is utilized and with the proviso that if vinylnaphthalene is being polymerized that a polymerization temperature within the range of 20°C to 100°C is utilized; (2) allowing the lithium terminated blocks to react with at least one conjugated diolefin monomer at a temperature within the range of 20°C to 100°C to produce lithium terminated diblock polymers; and (3) coupling the lithium terminated diblock polymers with at least one multivinylaromatic coupling agent at a temperature within the range of 0°C to 100°C to produce said star polymer.

2. A block polymer characterized in that it has the star-shaped, asymmetrical structure:

$$(A-B)_{x}-Y$$

wherein A is a polymer block which is comprised of repeat units which are derived from a member selected from the group consisting of isopropenylnaphthalene and vinylnaphthalene; wherein B is a

polymer block which is comprised of repeat units which are derived from at least one conjugated diolefin monomer; wherein Y is the residue of at least one multivinylaromatic coupling agent; and wherein x is an integer from 2 to 20.

3. A process as specified in claim 1 characterized in that said member selected from the group consisting of isopropenylnaphthalene and vinylnaphthalene is isopropenylnaphthalene; characterized in that said isopropenylnaphthalene is polymerized at a temperature within the range of -5°C to 30°C; characterized in that said conjugated diolefin monomers contain from 4 to 8 carbon atoms; and characterized in that said multivinylaromatic coupling agent contains 2 or 3 vinyl groups.

4. A process as specified in claim 1 or 3 characterized in that said organolithium compound is an organomonolithium compound and characterized in that said lithium terminated blocks are allowed to react with said conjugated diolefin monomers at a temperature within the range of 40°C to 70°C; and characterized in that from 3 to 20 moles of the multivinylaromatic coupling agent is utilized per mole of lithium in the lithium terminated diblocks.

5. A process as specified in claim 1, 3 or 4 characterized in that said multivinylaromatic coupling agent contains 2 vinyl groups; characterized in that said organolithium catalyst has the formula R-Li wherein R represents a hydrocarbyl radical containing from 1 to 20 carbon atoms; and characterized in that said multivinylaromatic coupling agent is divinylbenzene.

6. A process as specified in claim 1, 3, 4 or 5 characterized in that said conjugated diolefin monomer is selected from the group consisting of butadiene and isoprene.

7. A process as specified in claim 1 characterized in that said member selected from the group consisting of isopropenylnaphthalene and vinylnaphthalene is vinylnaphthalene; characterized in that said conjugated diolefin monomers contain from 4 to 8 carbon atoms; characterized in that from 3 to 20 moles of the multivinylaromatic coupling agent is utilized per mole of lithium in the lithium terminated diblocks; characterized in that said conjugated diolefin monomer is selected from the group consisting of 1,3-butadiene and isoprene; characterized in that said organolithium catalyst has the formula R-Li characterized in that R represents a hydrocarbyl radical containing from 1 to 20 carbon atoms; characterized in that said multivinylaromatic coupling agent contains 2 vinyl groups; characterized in that from 4 to 10 moles of the multivinylaromatic coupling agent are utilized per mole of lithium in the lithium terminated diblocks; characterized in that said vinylnaphthalene is polymerized at a temperature within the range of 40°C to 70°C and characterized in that said lithium terminated blocks are allowed to react with said conjugated diolefin monomers at a temperature within the range of 40°C to 70°C.

8. A block polymer as specified in claim 2 characterized in that A is a polymer block which is comprised of repeat units which are derived from isopropenylnaphthalene; characterized in that B is a polymer block which is comprised of repeat units which are derived from at least one conjugated diolefin monomer which contains from 4 to 8 carbon atoms; characterized in that Y is the residue of a multivinylaromatic coupling agent which contains 2 or 3 vinyl groups; characterized in that A is a polymer block having a molecular weight within the range of 4,000 to 50,000 and characterized in that B is a polymer block having a molecular weight within the range of 5,000 to 100,000.

9. A block polymer as specified in claim 1 or 8 characterized in that said conjugated diolefin monomers are selected from the group consisting of 1,3-butadiene and isoprene; characterized in that Y is the residue of a multivinylaromatic coupling agent which contains 2 vinyl groups; characterized in that A is a polymer block having a number average molecular weight within the range of 8,000 to 30,000 and characterized in that B is a polymer block having a number average molecular weight within the range of 10,000 to 70,000.

10. A block polymer as specified in claim 32 characterized in that Y is the residue of divinylbenzene; characterized in that A is a polymer block having a number average molecular weight within the range of 10,000 to 20,000; characterized in that B is a polymer block having a number average molecular weight within the range of 25,000 to 60,000; and characterized in that x is an integer from about 3 to about 10.